# EUROPÄISCHE PATENTSCHRIFT

(11) **EP 0 695 475 B1**
(45) Veröffentlichungstag und Bekanntmachung des Hinweises auf die Patenterteilung: **20.11.1996**
(21) Anmeldenummer: 94913108.0
(22) Anmeldetag: 31.03.1994
(51) Int. Cl.: H02G 3/08

(54) **ELEKTRISCHER ANSCHLUSSBLOCK MIT MODULAREM AUFBAU**
MODULAR-CONSTRUCTION ELECTRIC CONNECTION BLOCK
BLOC DE CONNEXION ELECTRIQUE A STRUCTURE MODULAIRE

(30) Priorität: 20.04.1993 EP 93106369
(43) Veröffentlichungstag der Anmeldung: 07.02.1996
(73) Patentinhaber: SIEMENS AKTIENGESELLSCHAFT, 80333 München (DE)
(72) Erfinder: MIEK, Wolfgang, D-92224 Amberg (DE); AICHEM, Peter, D-71032 Böblingen (DE); LIEB, Gerald, D-71394 Kernen (DE); SAHM, Jürgen, D-73760 Ostfildern (DE)
(86) Internationale Anmeldenummer: EP9401024
(87) Internationale Veröffentlichungsnummer: WO9424748

(56) Entgegenhaltungen:
- DE-C- 741 309
- GB-A- 721 684

## Beschreibung

Die Erfindung bezieht sich auf einen elektrischen Anschlußblock mit modularem Aufbau, bestehend aus mindestens zwei schalenförmigen in folgender Weise gleichausgebildeten Anschluß-Gehäuseteilen, die jeweils eine erste Schalenwand mit einem ersten Kabeldurchführungsloch und mit ersten mechanischen Verbindungsmitteln, eine dazu gegenüberliegende zweite Schalenwand mit einem zweiten Kabeldurchführungsloch und mit zweiten mechanischen Verbindungsmitteln und ein drittes Kabeldurchführungsloch in einer dritten Schalenwand aufweisen und die bei Aneinanderreihung der Anschlußgehäuseteile über die erste Schalenwand eines Gehäuseteils und zweite Schalenwand eines benachbarten Gehäuseteils mit den dazugehörigen mechanischen Verbindungsmitteln unter Bildung eines geraden Durchgangs durch das erste und zweite Kabeldurchführungsloch eng einander gekoppelt sind, wobei die ersten, zweiten und dritten Verbindungsmittel an den ersten, zweiten und dritten Kabeldurchführungslöchern ausgeführt sind und wobei die Anschlußgehäuseteile mittels eines hohlförmigen mit Außengewinden versehenen Zwischenstutzens verschraubt sind.

Elektrische Anschlußblöcke mit modularem Aufbau werden für ASI-Busmodule (Aktuator-Sensor-Interface) benötigt, die zum Anschluß an eine Busleitung vorgesehen sind. Die ASI-Busmodule bestehen meist aus einem Unterteil zum elektrischen Anschluß an die Busleitung und einem Oberteil mit Teilnehmeranschlüssen und mit einer auf den jeweiligen Anwendungsfall angepaßten elektrischen Schaltung. Über die Schaltung erfolgt der Datenaustausch zwischen den als Teilnehmer am ASI-Busmodul angekoppelten Aktuatoren bzw. Sensoren einerseits und einer ebenfalls an die Busleitung angeschalteten Master-Baugruppe andererseits. Die elektrische Schaltung sorgt im wesentlichen für die Umwandlung der digitalen Signale in für die Teilnehmer übliche Datensignale und umgekehrt. Die digitalen Signale sind z.B. auf die Versorgungsspannung der Busleitung aufmoduliert. Für dieses Bussystem besteht der Bedarf nach einem elektrischen Anschlußblock mit modularem Aufbau, der leicht erweiterbar ist und mit entsprechenden Oberteilen den Anschluß an einer Vielzahl von Modulen an die Busleitung ermöglicht. Dabei ist zu berücksichtigen, daß die Busleitung vielfach nur als Rundkabel ausgeführt ist.

Ein elektrischer Anschlußblock mit modularem Aufbau der obengenannten Art ist aus der DE-PS 741 309 bekannt. Hier sind Kuppeldosen für aus Schaltern, Steckvorrichtungen und dergleichen bestehende Kombinationen von elektrischen Unterputzapparaten offenbart. Die Dosen sind mit Hilfe von an ihnen vorgesehenen Stutzen miteinander zu verbinden. Die Stutzen sind an ausbrechbaren Öffnungen in den Seitenwänden der Kuppeldosen angeformt und weisen weder Außen- noch Innengewinde auf. Zur Dichtung bei der mechanischen Verbindung von mehreren Kuppeldosen sind Dichtungsringe erforderlich. Weiterhin ist es bekannt, für die durchgängige Verbindung zweier Kuppeldosen eine Hohlschraube mit Mutter zu verwenden.

Die mechanische und elektrische Kupplung einer Schalt-Sicherungseinheit mit einer weiteren Sicherungseinheit ist dem Dokument GB 721 684 zu entnehmen. Auch hier sind zwei Gehäuseteile in den Seitenwänden mit Durchführungslöchern zur Durchführung einer elektrischen Leitung versehen, über die der Anschluß einer weiteren Sicherung möglich ist. Eine mechanische Kopplung der Gehäuseteile, die zugleich eine Abdichtung der Durchführungslöcher von außen zum Innenraum hin mit sich bringt, ist hier nicht vorhanden.

Der Erfindung liegt die Aufgabe zugrunde, einen elektrischen Anschlußblock mit modularem Aufbau zu schaffen, der den vorangehenden genannten Anforderungen genügt, der einfach und kostengünstig herstellbar, platzsparend und leicht anschließbar ist. Die Aufgabe wird erfindungsgemäß dadurch gelöst, daß die Kabeldurchführungslöcher der ersten und zweiten Schalenwand mit Gewinden versehen sind und daß im Innenraum zwei Anschlußklemmenblöcke angeordnet sind, die jeweils mit einem Kontaktierungsteil elektrisch verbunden sind. Durch die enge Aneinanderreihung der Anschlußgehäuseteile wird den Anforderungen an platzsparende Bauweise aufgabengemaß Rechnung getragen. Mit der Verbindung einfacher Komponenten und durch einen einfachen Aufbau wird nun auch die Anforderung nach geringen Kosten erfüllt. Der Durchgang dient zur internen Verdrahtung zwischen benachbarten Anschluß-Gehäuseteilen.

Es ist von Vorteil, wenn die Gewinde als genormte Panzerrohrgewinde ausgebildet sind, da diese handelsüblich sind und somit eine kostengünstige Bauweise ermöglichen.

Eine besonders vorteilhafte Ausführungsform erhält man, wenn die Anschluß-Gehauseteile über die Panzerrohrgewinde mittels des Zwischenstutzens verschraubt sind. Auf diese Weise wird eine einfache und absolut dichte Aneinanderkopplung von Anschluß-Gehäuseteilen erreicht.

Weisen die genormten Panzerrohrgewinde eine solche Tiefe auf, daß eine Verschraubung mit genormten Druckschrauben möglich ist, so stellt dies ein besonders kostengünstige Ausführungsform mit zugleich garantiert dichter Kabeleinführung dar.

Weiterhin ist es zweckmäßig, wenn ein viertes Kabeldurchführungsloch mit einem vierten Gewinde in einer weiteren Schalenwand vorgesehen ist. Dies ermöglicht nämlich die Durchführung eines Kabels durch ein Anschluß-Gehäuseteil, von dem ausgehend die weiteren angekoppelten Anschluß-Gehäuseteile über eine interne Verdrahtung elektrisch anschließbar sind.

Als besonders vorteilhaft hat sich außerdem erwiesen, wenn die Anschluß-Gehäuseteile rechteckförmig sind und das erste und zweite Kabeldurchführungsloch mit Gewinde in der längsseitigen ersten Schalenwand und der gegenüberliegenden zweiten Schalenwand liegen und wenn an der querseitigen dritten Schalenwand das dritte und an der weiteren querseitigen Schalenwand das vierte Kabeldurchführungsloch vorgesehen ist.

Dies ermöglicht besonders schmale Anschluß-Gehäuseteile, mit denen sich Anschlußblöcke mit einer Vielzahl von Anschluß-Gehäuseteilen mit vergleichsweise geringem Raumbedarf herstellen lassen.

Ist das Kontaktierungsteil zur Steckkontaktierung, z.B. nach Art eines in eine Buchse steckbaren Kontaktstifts, geeignet, so läßt sich hiermit eine leichte Kontaktierung mit einem Oberteil-Gehäuse schaffen, in dem dieses auf das Anschluß-Gehäuseteil aufgesetzt wird.

Außerdem ist es vorteilhaft, wenn die Anschluß-Gehäuseteile jeweils mit zwei unterschiedlich ausgebildeten Positionierungsmitteln versehen sind, die zum Eingriff mit daran angepaßten Gegenmitteln von auf die Anschluß-Gehäuseteile aufsetzbaren Oberteil-Gehäusen dienen. Mit diesen Merkmalen läßt sich auf einfache Weise das lagerichtige Aufsetzen des Oberteil-Gehäuses auf das Anschluß-Gehäuseteil sicherstellen.

In manchen Anwendungsfällen besteht die Forderung nach einer Schirmung, die nicht nur durch die Verwendung von geschirmten Leitungen, sondern auch durch Maßnahmen an den Anklemmstellen zu gewährleisten ist. Als zweckmäßig hat sich dabei erwiesen, wenn die Anschlußklemmblöcke mit einem elektromagnetischen Schirm versehen sind, z.B. in Form eines Drahtkäfigs.

Um eine einfache kostengünstige Dichtung der Anschluß-Gehäuseteile zu erreichen, ist es vorteilhaft, wenn in die zum Kabelanschluß verwendeten Kabeldurchführungslöcher Verschlußkappen eingeschraubt sind.

Ein Ausführungsbeispiel der Erfindung wird im folgenden anhand einer Zeichnung näher erläutert. Es zeigen:
- FIG 1: einen elektrischen Anschlußblock mit interner Verdrahtung zwischen benachbarten Anschluß-Gehäuseteilen,
- FIG 2: drei neben einanderliegende Anschluß-Gehäuseteile mit zum elektrischen Anschluß durchgeschleifter Busleitung

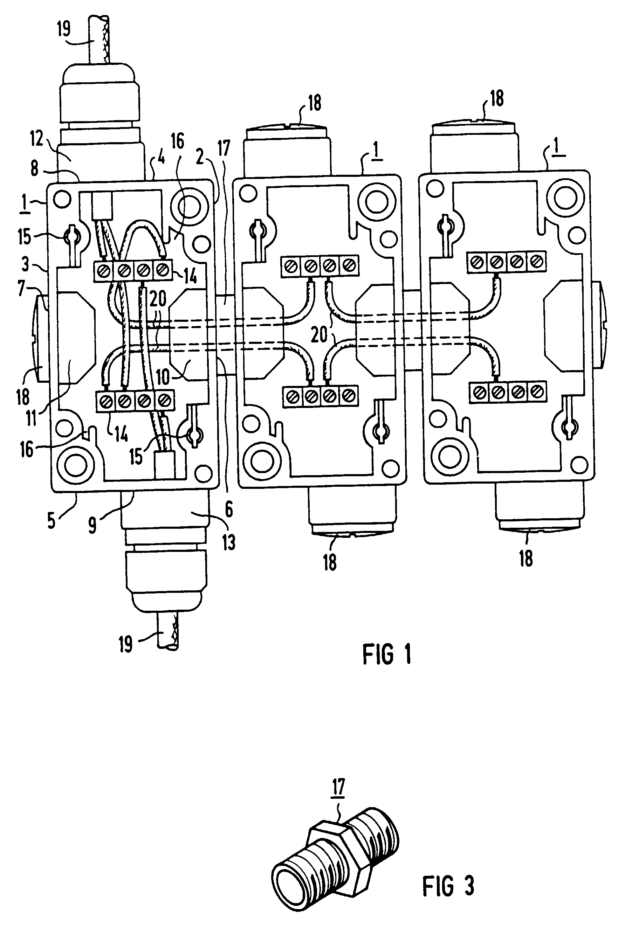

FIG 1 zeigt einen erfindungsgemäßen Anschlußblock 1, der aus drei, hinsichtlich der folgend genannten Merkmale, gleich ausgebildeten Anschluß-Gehäuseteilen 1 besteht, die eng aneinander gekoppelt sind. Die Anschluß-Gehäuseteile 1 dienen als Unterteile zum elektrischen Anschluß von ASI-Busmodulen (Aktuator-Sensor-Interface). Sie sind als rechteckförmige Schalen ausgeführt. Jede der vier Schalenwände 2,3,4,5 ist mit einem der Kabeldurchführungslöcher 6,7,8,9 mit einem genormten Gewinde 10,11,12 bzw. 13 versehen. Die Gewindetiefe ist so bemessen, daß neben handelsüblichen Panzerrohrgewinde-Verschraubungen auch DIN-mäßige Druckschrauben zur Einführung von Rundkabeln als Busleitungen zur Gewährleistung hoher Dichtigkeit verwendet werden können. Die Kabeldurchführungslöcher 6,7 mit zugehörigen Gewinden 10,11 liegen sich in den längsseitigen Schalenwänden 2,3 direkt gegenüber, so daß sich bei Aneinanderreihung der Anschluß-Gehäuseteile 1 ein gerader Durchgang durch die entsprechenden Kabeldurchführungslöcher 6,7 ergibt. Zur Verschraubung von Anschluß-Gehäuseteilen 1 über die zugehörigen Gewinde 10,11 dient ein hohlförmiger, mit Außengewinden versehener Zwischenstutzen 17, wie er in FIG 3 dargestellt ist.

Über die Gewinde 12,13 in den schmalseitigen Schalenwänden 4,5 sind mittels Panzerrohrgewinde Verschraubungen Rundkabel 19 in den Innenraum des linken Anschluß-Gehäuseteils 1 geführt. Das weitere linke Kabeldurchführungsloch 7 in der Schalenwand 3 ist wie auch die anderen zur Ankopplung oder Kabeleinführung nicht verwendeten Kabeldurchführungslöcher des Anschlußblocks durch Verschraubung mit einer Verschlußkappe 18 abgedichtet.

Im Innenraum des Anschluß-Gehäuseteils 1 liegen zwei, für unterschiedliche Spannungspotentiale vorgesehene Anschlußklemmblöcke 14, an die jeweils eine der beiden Leitungsadern der abisolierten Rundkabel 19 angeklemmt sind. Die Versorgungsspannung wird zum Beispiel über das untere Rundkabel 19 zugeführt und über die Anschlußklemmblöcke 14 an das obere Rundkabel 19 weitergeleitet. Zwischen den Anschlußklemmblöcken 11 der drei Anschlußgehäuseteile 1 besteht über die erwähnten Durchgänge eine innere Verdrahtung, über die die Spannungsversorgung erfolgt. Hierfür wird vorteilhafter Weise Schaltlitze 20 verwendet, die sich gegenüber Volldraht leichter verlegen läßt.

Beide Anschlußklemmblöcke 14 sind mit je einer Kontaktbuchse 12 als Kontaktierungsteil elektrisch verbunden. Über dazu passenden Kontaktstifte kann die Schaltung eines auf das Anschluß-Gehäuseteil 1 aufsetzbaren Oberteils (hier nicht dargestellt) spannungsmäßig versorgt werden.

Um das lagerichtige Aufsetzen des Oberteils auf das Anschluß-Gehäuseteil 1 zu gewährleisten, sind in beiden zueiander passende Positionierungsmittel vorgesehen. Beim Anschluß-Gehäuseteil 1 sind dies die unterschiedlich breit ausgebildeten Führungen 16 gemäß FIG 1.

Zu der in FIG 1 dargestellten Durchschleifung eines Rundkabels 19 durch das linke Anschluß-Gehäuseteil 1 sind folgende Alternativen denkbar. Nur ein Rundkabel 19 wird einem Anschluß-Gehäuseteil 1 zugeführt, was der Versorgung durch eine Stichleitung entspricht. Weiterhin ist die Möglichkeit der Verwendung des Anschlußblocks als Spannungsverzweigung gegeben. Hierbei wird die Spannung über die Durchgänge an benachbarte Anschluß-Gehäuseteile 1 weitergeleitet und von dort ein Spannungsabgang über Rundkabel, die an die Anschlußklemmblöcke 14 angeklemmt sind, nach außen hergestellt.

Der erfindungsgemäße Anschlußblock ist auch für Anwendungsfälle geeignet, die eine gute elektromagnetische Schirmung erfordern. Hierzu werden geschirmte Rundkabel 19 verwendet. Außerdem werden die Anschlußklemmböcke 14 mit Abschirmkäfigen versehen.

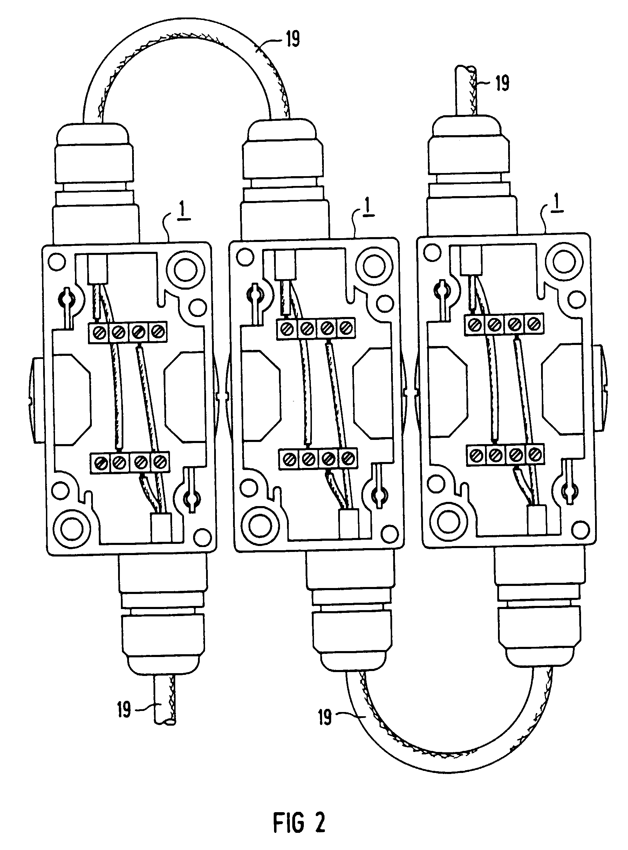

In FIG 2 ist eine Alternative zum elektrischen Anschlußblock gezeigt, die die Vorteile der beschriebenen Erfindung verdeutlicht. Drei Anschluß-Gehäuseteile 1 der vorgeschriebenen Art sind hier ohne gegenseitige Kopplung aneinandergereiht. Die Spannungsversorgung erfolgt durch mehrfaches Schleifen eines Rundkabels 19. An jedem Anschluß-Gehäuseteil 1 ist zweimalig abzuisolieren und die Verwendung von zwei relativ teuren Panzerrohr-Gewindestutzen erforderlich. Die Verschleifung des Rundkabels 19 ist sowohl bezüglich der Bauteile als auch der Montage im Vergleich zum beschriebenen Anschlußblock kostenaufwendig. Sie nimmt außerdem mehr Platz ein. Auf die erwähnten Möglichkeiten der Spannungsverzweigung muß hier verzichtet werden.

## Patentansprüche

1. Elektrischer Anschlußblock mit modularem Aufbau, bestehend aus mindestens zwei schalenförmigen, in folgender Weise gleich ausgebildeten Anschluß-Gehäuseteilen (1), die jeweils eine erste Schalenwand (2) mit einem ersten Kabeldurchführungsloch (6) und mit ersten mechanischen Verbindungsmitteln (10), eine dazugehörige gegenüberliegende zweite Schalenwand (3) mit einem zweiten Kabeldurchführungsloch (7) und mit zweiten mechanischen Verbindungsmitteln (11) und ein drittes Kabeldurchführungsloch (8) in einer dritten Schalenwand (4) aufweisen, und die bei Aneinanderreihung der Anschluß-Gehäuseteile (1) über die erste Schalenwand (2) eines Gehäuseteiles und zweite Schalenwand (3) eines benachbarten Gehäuseteiles mit den dazugehörigen mechanischen Verbindungsmitteln (10,11) unter Bildung eines geraden Durchgangs durch das erste (6) und zweite (7) Kabeldurchführungsloch eng aneinander gekoppelt sind, wobei die ersten, zweiten und dritten Verbindungsmittel an den ersten (6), zweiten (7) und dritten (8) Kabeldurchführungslöchern ausgeführt sind, und wobei die Anschluß-Gehäuseteile (1) mittels eines hohlförmigen mit Außengewinden versehenen Zwischenstutzens (17) verschraubt sind, **dadurch gekennzeichnet**, daß die Kabeldurchführungslöcher (6,7) der ersten (2) und zweiten (3) Schalenwand mit Gewinden (10,11) versehen sind und daß im Innenraum Anschlußklemmblöcke (14) angeordnet sind, die jeweils mit einem Kontaktierungsteil (5) elektrisch verbunden sind.

2. Elektrischer Anschlußblock nach Anspruch 1, **dadurch gekennzeichnet**, daß die Gewinde (10,11,12) als genormte Panzerrohrgewinde ausgebildet sind.

3. Elektrischer Anschlußblock nach Anspruch 1 oder 2, **dadurch gekennzeichnet**, daß die Anschluß-Gehäuseteile (1) über die Panzerrohrgewinde (10,11) mittels des Zwischenstutzens (17) verschraubt sind.

4. Elektrischer Anschlußblock nach einem der vorangehenden Ansprüche, **dadurch gekennzeichnet**, daß die genormten Panzerrohrgewinde (10,11,12) eine solche Tiefe aufweisen, daß eine Verschraubung mit genormten Druckschrauben möglich ist.

5. Elektrischer Anschlußblock nach einem der vorangehenden Ansprüche, **dadurch gekennzeichnet**, daß ein viertes Kabeldurchführungsloch (9) mit einem vierten Gewinde (13) in einer weiteren Schalenwand (5) vorgesehen ist.

6. Elektrischer Anschlußblock nach einem der vorangehenden Ansprüche, **dadurch gekennzeichnet**, daß die Anschluß-Gehäuseteile (1) rechteckförmig sind und das erste (6) und zweite (7) Kabeldurchführungsloch mit Gewinde (10 bzw. 11) in der längsseitigen ersten Schalenwand (2) und der zweiten gegenüberliegenden Schalenwand (3) liegen, und daß an der querseitigen dritten Schalenwand (4) das dritte (8) und an der anderen querseitigen weiteren Schalenwand (5) das vierte Kabeldurchführungsloch (9) vorgesehen ist.

7. Elektrischer Anschlußblock nach einem der vorangehenden Ansprüche, **dadurch gekennzeichnet**, daß das Kontaktierungsteil (15) zur Steckkontaktierung, z.B. nach Art eines in eine Buchse steckbaren Kontaktstifts geeignet ist.

8. Elektrischer Anschlußblock nach einem der vorangehenden Ansprüche, **dadurch gekennzeichnet**, daß die Anschluß-Gehäuseteile (1) jeweils mit zwei unterschiedlich ausgebildeten Positionierungsmitteln (16) versehen sind, die zum Eingriff mit daran angepaßten Gegenmitteln von auf die Gehäuseanschlußteile (1) aufsetzbaren Oberteil-Gehäusen dienen.

9. Elektrischer Anschlußblock nach einem der vorangehenden Ansprüche, **dadurch gekennzeichnet**, daß die Anschlußklemmblöcke (14) mit einem elektromagnetischen Schirm versehen sind.

10. Elektrischer Anschlußblock nach einem der vorangehenden Ansprüche, **dadurch gekennzeichnet**, daß in die nicht zum Kabelanschluß verwendeten Kabeldurchführungslöcher Verschlußkappen (18) eingeschraubt sind.

11. Elektrischer Anschlußblock nach einem der vorangehenden Ansprüche, **dadurch gekennzeichnet**, daß über den geraden Durchgang durch das erste (6) und zweite (7) Kabeldurchführungsloch eine interne Verdrahtung zwischen benachbarten Anschluß-Gehäuseteilen (1) besteht.

## Claims

1. Electrical connection block having a modular structure, comprising at least two connection housing parts (1), which are in the form of shells, are constructed identically (in the following way), each have a first shell wall (2) with a first cable bushing hole (6) and with first mechanical connecting means (10), an associated, opposite second shell wall (3) with a second cable bushing hole (7) and with second mechanical connecting means (11), and a third cable bushing hole (8) in a third shell wall (4), and which connection housing parts are coupled closely to one another, when the connection housing parts (1) are run together, via the first shell wall (2) of a housing part and the second shell wall (3) of an adjacent housing part using the associated mechanical connecting means (10, 11), with the formation of a straight passage through the first (6) and the second (7) cable bushing hole, the first, second and third connecting means being implemented on the first (6), second (7) and third (8) cable bushing holes, and the connection housing parts (1) being screwed together by means of a hollow intermediate connector (17) provided with outer threads, characterized in that the cable bushing holes (6, 7) of the first (2) and the second (3) shell wall are provided with threads (10, 11), and in that terminal blocks (14) which are each electrically connected to a contact-making part (5) are arranged in the inner space.

2. Electrical connection block according to Claim 1, characterized in that the threads (10, 11, 12) are constructed as standardized heavy-gauge conduit threads.

3. Electrical connection block according to Claim 1 or 2, characterized in that the connection housing parts (1) are screwed together via the heavy-gauge conduit threads (10, 11) by means of an intermediate connector (17).

4. Electrical connection block according to one of the preceding claims, characterized in that the standardized heavy-gauge conduit threads (10, 11, 12) are so deep that a screw joint using standardized pressing screws is possible.

5. Electrical connection block according to one of the preceding claims, characterized in that a fourth cable bushing hole (9) having a fourth thread (13) is provided in a further shell wall (5).

6. Electrical connection block according to one of the preceding claims, characterized in that the connection housing parts (1) are rectangular and the first (6) and the second (7) cable bushing hole with threads (10 and 11, respectively) are situated in the longitudinal first shell wall (2) and the second, opposite shell wall (3), and in that the third cable bushing hole (8) is provided on the transverse third shell wall (4) and the fourth cable bushing hole (9) is provided on the other transverse shell wall (5).

7. Electrical connection block according to one of the preceding claims, characterized in that the contact-making part (15) is suitable for plug-in contact making, for example in the manner of a contact pin which can be plugged into a socket.

8. Electrical connection block according to one of the preceding claims, characterized in that the connection housing parts (1) are each provided with two differently constructed positioning means (16) which are used to engage with mating means, matched thereto, of top part housings which can be placed onto the connection housing parts (1).

9. Electrical connection block according to one of the preceding claims, characterized in that the terminal blocks (14) are provided with an electromagnetic screen.

10. Electrical connection block according to one of the preceding claims, characterized in that closure caps (18) are screwed into the cable bushing holes not used for the purpose of cable connection.

11. Electrical connection block according to one of the preceding claims, characterized in that internal wiring exists between adjacent connection housing parts (1) via the straight passage through the first (6) and the second (7) cable bushing hole.

## Revendications

1. Bloc de raccordement électrique à structure modulaire, constitué d'au moins deux pièces (1) de boîtier de raccordement en forme de coquille qui sont constituées de manière identique comme suit, qui comportent chacune une première paroi (2) de coquille comportant un premier trou (6) de traversée de câble et comportant des premiers (10) moyens mécaniques de liaison, une deuxième paroi (3) de coquille faisant face à la première, comportant un deuxième trou (7) de traversée de câble et des deuxièmes moyens (11) mécaniques de liaison, et un troisième trou (8) de traversée de câble ménagé dans une troisième paroi (4) de coquille, et qui, lorsque l'on aligne les pièces (1) de boîtier de raccordement, sont reliées étroitement entre elles par l'intermédiaire de la première paroi (3) de coquille d'une pièce de boîtier et de la deuxième paroi (4) de coquille d'une pièce de boîtier voisine, par les moyens (10, 11) mécaniques de liaison qui leur sont associés, avec formation d'un passage rectiligne dans le premier (6) et le deuxième (7) trous de traversée de câble, les premier, deuxième et troisième moyens mécaniques de liaison étant réalisés sur les premier (6), deuxième (7) et troisième (8) trous de traversée de câble, et les pièces (1) de boîtier de raccordement étant vissées au moyen d'un embout (17) intermédiaire creux muni de filetages, caractérisé en ce que les trous (6, 7) de traversée de câble de la première (2) et de la deuxième (3) parois de coquille sont munis de taraudages (10, 11), et en ce qu'il est monté à l'intérieur deux groupes (14) de bornes de raccordement qui sont reliés électriquement chacun à une pièce (5) de mise en contact.

2. Bloc de raccordement électrique suivant la revendication 1, caractérisé en ce que les taraudages (10, 11, 12) sont des taraudages à tube armé normalisés.

3. Bloc de raccordement électrique suivant la revendication 1 ou 2, caractérisé en ce que les pièces (1) de boîtier de raccordement sont vissées par l'intermédiaire des taraudages (10, 11) à tube armé, au moyen de l'embout (17) intermédiaire.

4. Bloc de raccordement électrique suivant une des revendications précédentes, caractérisé en ce que les taraudages (10, 11, 12) à tube armé normalisés ont une profondeur d'une dimension telle qu'un vissage par des vis de serrage normalisées est possible.

5. Bloc de raccordement électrique suivant une des revendications précédentes, caractérisé en ce qu'il est prévu un quatrième trou (9) de traversée de câble comportant un quatrième taraudage (13) ménagé dans une autre paroi (5) de coquille.

6. Bloc de raccordement électrique suivant une des revendications précédentes, caractérisé en ce que les pièces (1) du boîtier de raccordement sont de forme rectangulaire et en ce que le premier (6) et le deuxième (7) trous de traversée de câble à taraudages (10 et 11) se trouvent dans la première paroi (2) de coquille située sur un grand côté et dans la deuxième paroi (3) de coquille opposée, et en ce que le troisième trou (8) de traversée de câble est prévu sur la troisième paroi (4) de coquille située sur un petit côté et le quatrième trou (9) de traversée de câble sur l'autre paroi (5) de coquille située sur un petit côté.

7. Bloc de raccordement électrique suivant une des revendications précédentes, caractérisé en ce que la pièce (15) de mise en contact convient à la mise en contact par enfichage, par exemple du genre d'une broche de contact pouvant être enfichée dans une douille.

8. Bloc de raccordement électrique suivant une des revendications précédentes, caractérisé en ce que les pièces (1) du boîtier de raccordement soient munies chacune de deux moyens (16) de mise en position conformés différemment, qui servent à venir en prise avec des moyens antagonistes adaptés de boîtiers de pièce supérieure enfilés sur les pièces (1) du boîtier de raccordement.

9. Bloc de raccordement électrique suivant une des revendications précédentes, caractérisé en ce que les groupes (14) de bornes de raccordement sont munis d'un blindage électromagnétique.

10. Bloc de raccordement électrique suivant une des revendications précédentes, caractérisé en ce que des capuchons (18) de fermeture sont vissés dans les trous de traversée de câble ne servant pas au raccordement de câble.

11. Bloc de raccordement électrique suivant une des revendications précédentes, caractérisé en ce que, par l'intermédiaire du passage rectiligne dans le premier (6) et le deuxième (7) trous de traversée de câble, il existe un câblage interne entre des pièces (1) de boîtier de raccordement voisines.
